# EUROPEAN PATENT SPECIFICATION

(11) **EP 3 422 587 B1**
(45) Date of publication and mention of the grant of the patent: **29.12.2021**
(21) Application number: 17179007.4
(22) Date of filing: 30.06.2017
(51) Int. Cl.: H04B 5/00, H02J 50/00

(54) **MIMO COMMUNICATION APPARATUS AND METHOD OF TRANSMITTING INFORMATION**
MIMO-KOMMUNIKATIONSVORRICHTUNG UND VERFAHREN ZUR INFORMATIONSÜBERTRAGUNG
APPAREIL DE COMMUNICATION MIMO ET PROCÉDÉ DE TRANSMISSION D'INFORMATIONS

(43) Date of publication of application: 02.01.2019
(73) Proprietor: Vestel Elektronik Sanayi ve Ticaret A.S., 45030 Manisa (TR); Özyegin Üniversitesi, 34794 Çekmeköy/ Istanbul (TR)
(72) Inventor: GÜLBAHAR, Burhan, 34794 Çekmeköy / Istanbul (TR); MEMISOGLU, Görkem, 45030 Manisa (TR)
(74) Representative: Kehl, Ascherl, Liebhoff & Ettmayr Patentanwälte Partnerschaft mbB

(56) References cited:
- EP-A1- 1 793 307
- WO-A1-00/41334
- WO-A1-2011/053922
- US-B1- 9 554 411
- ZENG YONG ET AL: "Communications and Signals Design for Wireless Power Transmission", IEEE TRANSACTIONS ON COMMUNICATIONS, IEEE SERVICE CENTER, PISCATAWAY, NJ. USA, vol. 65, no. 5, 5 May 2017 (2017-05-05), pages 2264-2290, XP011649470, ISSN: 0090-6778, DOI: 10.1109/TCOMM.2017.2676103 [retrieved on 2017-05-15]

## Description

The present invention relates to a multiple-input, multiple-output (MIMO) communication apparatus according to claim 1, and a method of transmitting information according to claim 8.

### Background of the Invention

Existing communication apparatuses and methods of transmitting information typically rely on electromagnetic means (such as optical or radio-frequency radiation or magneto-inductive coupling) or on acoustic radiation as the physical channel for transmitting information. With recent developments in biotechnology and biochemistry, some existing communication apparatuses and methods of transmitting information use molecular means as the physical channel instead. Apparatuses and methods which rely on electromagnetic means as the physical channel can be used for wireless multiple-input, multiple-output (MIMO) and multiple-input, single-output (MISO) communication. Recently, wireless MIMO and MISO have also been used for simultaneous transmission of power, as well as for the transmission of information. This is generally known as simultaneous wireless information and power transfer, abbreviated as SWIPT. Communication apparatuses and methods of transmitting information which use molecular means as the physical channel instead are generally not suitable for such applications. Some examples of the application of SWIPT technology to radio-frequency MIMO and MISO systems can be found in the literature in the following documents: Jun Zhang et al.: "Achievable ergodic secrecy rate for MIMO SWIPT wiretap channels", 2015 IEEE International Conference on Communication Workshop (ICCW), 8-12 June 2015; Rui Zhang & Chin Keong Ho: "MIMO Broadcasting for Simultaneous Wireless Information and Power Transfer", IEEE Transactions on Wireless Communications, Volume 12, Issue 5, May 2013, pp. 1989-2001; Muhammad R.A. Khandaker: "SWIPT in MISO Multicasting Systems", IEEE Wireless Communications Letters, Volume 3, No. 3, June 2014.

EP 1 793 307 A describes an apparatus comprising a portable electronic device and a capacitive charger for capacitively charging the portable electronic device when the portable electronic device is placed adjacent the charger. The charger includes a charger communication unit which can communicate with a communication unit of the device via capacitive electrodes of each of the charger and the device, for example by modulating data onto the charging signal. Thus, EP 1 793 307 A describes one possible application of SWIPT technology. WO 2000/41334 describes a wireless electrostatic charging and communication system which includes an electrostatic transceiver, such as a smart card or radio-frequency identification (RFID) card, which does not require physical contact to electrodes. This electrostatic system is capacitance-based, and charging and communication occur over capacitively coupled electrostatic electrodes. Thus, WO 2000/41334 describes another possible application of SWIPT technology.

All such known communication systems and methods which rely on electromagnetic means as the physical channel have several disadvantages, as follows. Firstly, they can suffer from jamming and interference from external sources of electromagnetic radiation, as well as interference or "crosstalk" between adjacent and nearby channels. They can also have security vulnerabilities in the physical channel, which can be physically "hacked" or tapped into (wiretapping). Similar disadvantages are associated with existing systems and methods of communication which instead rely on acoustic radiation as the physical channel, which can arise from external sources of sound, as well as from interference between channels. It would therefore be desirable to provide an alternative communication apparatus and method of transmitting information which relied on a different physical channel not subject to such drawbacks.

WO 2011/053922 describes a technique for wireless power transmission (without simultaneous transmission of information) using laser-induced plasma channels in atmosphere.

### Object of the Invention

it is therefore an object of the invention to provide a multiple-input, multiple-output (MIMO) communication apparatus and a method of transmitting information.

### Description of the Invention

The object of the invention is solved by a multiple-input, multiple-output (MIMO) communication apparatus according to claim 1. The MIMO communication apparatus at least comprises a first array of electrodes, a second array of electrodes, a channel containing an ionisable gaseous medium disposed between the first and second arrays of electrodes, a channel controller, a modulator, a charger, a charge- and/or voltage-measuring device, and a demodulator. The channel controller is for varying at least one property of the channel. The modulator is for modulating a charge and/or voltage to apply to the first array of electrodes with an information-bearing signal. The charger is for applying the modulated charge and/or voltage to one or more electrodes of the first array. The charge- and/or voltage-measuring device is for measuring the charge and/or voltage of the second array of electrodes. The demodulator is for demodulating the measured charge and/or voltage to recover the signal. A separation between the first and second arrays of electrodes is variable by the channel controller for transmitting the information-bearing signal via an electrical discharge across the channel from one or more electrodes of the first array to one or more electrodes of the second array.

This solution is beneficial because information is transmitted from the first to the second array of electrodes by one or more electrical discharges, or sparks, through the ionisable gaseous medium. Such an electrical discharge is immune to radio-frequency sources of electromagnetic radiation which are external to the apparatus, thereby rendering the apparatus invulnerable to jamming or interference. Moreover, electromagnetic radiation emitted in the radio-frequency band by one of a plurality of simultaneous electrical discharges through the same ionisable gaseous medium does not interfere with other such discharges, resulting in an absence of crosstalk. Furthermore, the channel containing the ionisable gaseous medium cannot be easily accessed or "hacked" without it being obvious from a resulting disturbance in the transmission of information from the first to the second array of electrodes that the channel has been compromised.

Typically, the first and second arrays of electrodes have a different electrical polarity from each other. However, the electrodes of the first array may have either a positive or a negative polarity, in which case, the electrodes of the second array would respectively have a negative or a positive polarity instead. Thus, whereas in the present disclosure, an electrical discharge is described as being transmitted from the first to the second array of electrodes, in practice, any electrical discharge is generally made up of a leader of negatively charged plasma emanating from one electrode and another leader of positively charged plasma emanating from the electrode of opposite polarity, which connect with each other to form a discharge. The respective locations of the two opposing leaders of negatively and positively charged plasma therefore depend on the polarities of the electrodes of the first and second arrays in any given embodiment. In all cases, however, information is transmitted from the first to the second array of electrodes as a result of the discharge.

The first and second arrays of electrodes render the apparatus suitable for use not only as a MIMO communication apparatus, but also as a MISO (multiple-input, single-output) and a SIMO (single-input, multiple-output) communication apparatus, since the latter two are both special cases of a MIMO apparatus.

The channel controller may vary at least one property of the channel either before or during the transmission of information by one or more electrical discharges. The at least one property of the channel which is variable by the channel controller may be at least one property of the channel itself, such as one or more of its physical dimensions, or may be at least one property of the ionisable gaseous medium, or may be a combination of properties of the channel itself and of the ionisable gaseous medium.

The modulator may be arranged to modulate either or both of the amplitude and frequency of the charge and/or voltage to apply to the first array of electrodes. The charge denotes the electrostatic charge before transmission of an electrical discharge from the first to the second array of electrodes, as measured in coulombs, whereas the voltage denotes the energy of such an electrical discharge as measured in joules per coulomb. One or both of these quantities may be modulated by the modulator.

Advantageous embodiments of the invention may be configured according to any claim and/or part of the following description.

Preferably, the channel controller is able to vary at least one of the pressure, the temperature and the composition of the ionisable gaseous medium, and/or is able to evacuate the ionisable gaseous medium from the channel.

This solution is advantageous because, unlike a conventional electromagnetic or acoustic system or method of communication, in which the physical channel (for example, a fibre-optic cable or a metallic wire) is typically fixed and unchanging, the properties of the physical channel in the apparatus of the invention can be carefully controlled according to requirements to modify the transmission of information from the first to the second array of electrodes. Apart from modifying either one or both of the pressure and temperature of the ionisable gaseous medium to vary its breakdown voltage for electrical discharge, the composition of gases in the ionisable gaseous medium may also be varied according to requirements. Thus, for example, the composition of the ionisable gaseous medium may varied to be atmospheric air of different humidities, to be a single gaseous element or compound, or to be a combination of different gaseous elements and/or compounds in different possible proportions and at different partial pressures, without limitation, according to requirements. Moreover, the channel controller is preferably also able to evacuate the ionisable gaseous medium from the channel in order to close the channel, thereby preventing its use for communication.

A separation between the first array of electrodes and the second array of electrodes is variable by the channel controller. This solution is beneficial because the separation between the first and second arrays of electrodes can be varied by the channel controller to alter the breakdown voltage required for an electrical discharge between the first and second arrays of electrodes. The separation between the first array of electrodes and the second array of electrodes may be varied from nanoscale or microscopic distances up to macroscopic distances of several metres or more. The separation between the first array of electrodes and the second array of electrodes may be increased in order to increase the breakdown voltage of the channel and/or to reduce the probability of unintended transmission of data symbols by Fowler-Nordheim tunnelling and other quantum-mechanical effects. On the other hand, the separation between the first array of electrodes and the second array of electrodes can also be reduced to nanoscale distances to allow for the controllable transmission of information using quantum-mechanical tunnelling from the first array of electrodes to the second array of electrodes.

Preferably, at least one of a pattern of and a separation between adjacent electrodes in at least one of the first and second arrays of electrodes is adjustable. In one possible embodiment, the electrodes in both the first and second arrays can be arranged in respective *n* x *m* grids. This arrangement is beneficial because it allows for easy addressing of the electrodes in each array for MIMO communication. However, the electrodes can instead be arranged in other patterns according to requirements, for example in order to change the connections established by electrical discharges between individual ones of the electrodes of the first array and individual ones of the electrodes of the second array. The separations between adjacent electrodes in the same array as each other can also be adjusted in order to control the probability of discharges between neighbouring electrodes carrying different charges and/or voltages from each other, including due to quantum-mechanical effects acting on the nanoscale.

The separations between adjacent electrodes in the same array can be reduced in order to increase the diversity of transmission; in other words, to increase the probability of transmission of the same signal via two or more different propagation paths. This is an example of a "diversity scheme" in telecommunications theory and has the advantage of increasing the signal-to-noise ratio (SNR). On the other hand, the separations between adjacent electrodes in the same array can instead be reduced in order to reduce the probability of such multiple propagation paths for one and the same signal. This has the advantage of rendering the apparatus more suitable for multiplexing.

Preferably, the apparatus further comprises a coder for applying a forward error-correction (FEC) code to the modulated charge and/or voltage before an electrical discharge is transmitted from the first to the second array and a decoder for decoding the measured charge and/or voltage after the electrical discharge has been transmitted from the first to the second array. This solution is beneficial because in embodiments of the apparatus at nanoscale or microscopic distances, Fowler-Nordheim tunnelling and other quantum-mechanical effects can create unintended discharges leading to the transmission of undesired data symbols in the information transmitted, which need to be corrected. Even at macroscopic distances, free electron emission can lead to electron avalanche discharges (Townsend or dark discharges) also requiring error correction.

Preferably, the apparatus further comprises at least one laser for guiding an electrical discharge from at least one of the electrodes of the first array to at least one of the electrodes of the second array. Such laser guiding can result in a substantially rectilinear electrical discharge over a distance of a metre or more, in contrast to the traditional image of an electrical discharge being a chaotic and jagged - even branching - path of ionised gas. This solution is therefore beneficial because it allows individual electrodes of the first and second arrays to be carefully and controllably selected for the establishment of an electrical discharge therebetween. Moreover, since lasers can be switched and redirected at high speed, such laser guiding can be programmed according to requirements in order to provide any complicated sequence of high-speed discharges from one or more selected electrodes of the first array to one or more selected electrodes of the second array.

Preferably, the apparatus further comprises at least one energy storage device for accumulating energy from electrical discharges received by at least one electrode of the second array. Since such electrical discharges can carry significant amounts of energy, this solution is beneficial because it allows for simultaneous wireless information and power transfer (SWIPT) from the first array of electrodes to the second array of electrodes. The energy storage device may, for example, be any one or more of an electrical battery, a capacitor or a supercapacitor.

In various different embodiments, the apparatus may further comprise a multiplexer associated with the first array of electrodes and a demultiplexer associated with the second array of electrodes. This solution is beneficial because the apparatus may then be used for simultaneous transmission of a plurality of different signals via a plurality of electrical discharges from the first to the second array of electrodes. Use of the apparatus for multiplexing as against diversity of transmission may be traded off against each other (usually known in MIMO systems as diversity-multiplexing trade-off, or DMT for short) by adjusting the separations between adjacent electrodes in the same array as each other, as well as by varying other parameters of the apparatus by means of the channel controller.

The present invention also relates to a method of transmitting information. The method at least comprises modulating a charge and/or voltage with an information-bearing signal, charging one or more electrodes of a first array of electrodes with the modulated charge and/or voltage, controlling at least one property of a channel containing an ionisable gaseous medium, transmitting an electrical discharge across the channel from the one or more electrodes of the first array to one or more electrodes of a second array of electrodes, measuring the charge and/or voltage at the second array of electrodes, and demodulating the measured charge and/or voltage to recover the signal.

This solution is beneficial because the information-bearing signal is thus transmitted via an electrical discharge through the ionisable gaseous medium without risk of jamming or interference and without crosstalk between other signals simultaneously transmitted via the same physical channel. This method is thus suitable for MIMO, MISO and SIMO communications.

Preferably, controlling at least one property of the channel comprises controlling at least one of the pressure, the temperature and the composition of the ionisable gaseous medium. This solution is beneficial because the pressure and temperature of the ionisable gaseous medium, as well as the composition of gases in the ionisable gaseous medium, may all be varied according to requirements, in order to change the breakdown voltage of the gaseous medium for transmission of an electrical discharge between the first and second arrays of electrodes.

Controlling at least one property of the channel at least comprises controlling a separation between the first array of electrodes and the second array of electrodes. This solution is beneficial because the separation between the first and second arrays of electrodes can be varied to alter the charge and/or voltage required for an electrical discharge between the first and second arrays of electrodes.

In a possible embodiment, the method may further comprise closing the channel by evacuating the ionisable gaseous medium therefrom. Evacuating the ionisable gaseous medium from the channel has the effect of increasing the breakdown voltage to that of free space according to the separation between the first array of electrodes and the second array of electrodes. This solution is beneficial because in conventional methods of wireless communication which use electromagnetic radiation, whether of radio or optical frequency, the communication channel cannot be closed by being evacuated, since radio and optical signals both propagate freely in vacuum.

In such a case, the method preferably further comprises increasing the separation between the first array of electrodes and the second array of electrodes at the same time as evacuating the ionisable gaseous medium from the channel. This solution is beneficial because increasing the separation between the first and second arrays of electrodes increases the breakdown voltage required for an electrical discharge, as approximated empirically by Paschen's law, thereby closing the channel.

Preferably, the method further comprises applying a forward error-correction code to the modulated charge and/or voltage before transmitting the electrical discharge, and decoding the measured charge and/or voltage after transmitting the electrical discharge. This solution is beneficial because unintended discharges caused by Fowler-Nordheim tunnelling and other quantum-mechanical effects at nanoscale or microscopic separations of the first and second arrays of electrodes, as well as Townsend or dark discharges caused by free electron emission at macroscopic separations of the first and second arrays of electrodes, either or both of which can lead to errors in the transmission of the information-bearing signal, can thereby be corrected for.

Preferably, the method further comprises adjusting at least one of a pattern of and a separation between adjacent electrodes in at least one of the first and second arrays of electrodes. This solution is beneficial because it allows MIMO communication to be controlled as desired, including by diversity-multiplexing trade-off (DMT) between simultaneously transmitted signals.

Preferably, the method further comprises guiding the electrical discharge with a laser. One or more lasers may be used to guide one or more electrical discharges through the ionisable gaseous medium simultaneously. This solution is beneficial because it allows one or multiple discharges to be guided along respective substantially rectilinear pathways from one or more selected electrodes of each of the first and second arrays.

The present invention further relates to a computer program product or a program code or system for executing one or more than one of the herein described methods.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a schematic diagram of an embodiment of a multiple-input, multiple-output (MIMO) communication apparatus; and
Fig. 2 is a schematic flow diagram of an embodiment of a method of transmitting information using a MIMO communication apparatus such as that shown in Fig. 1.

### Detailed Description of the Drawings

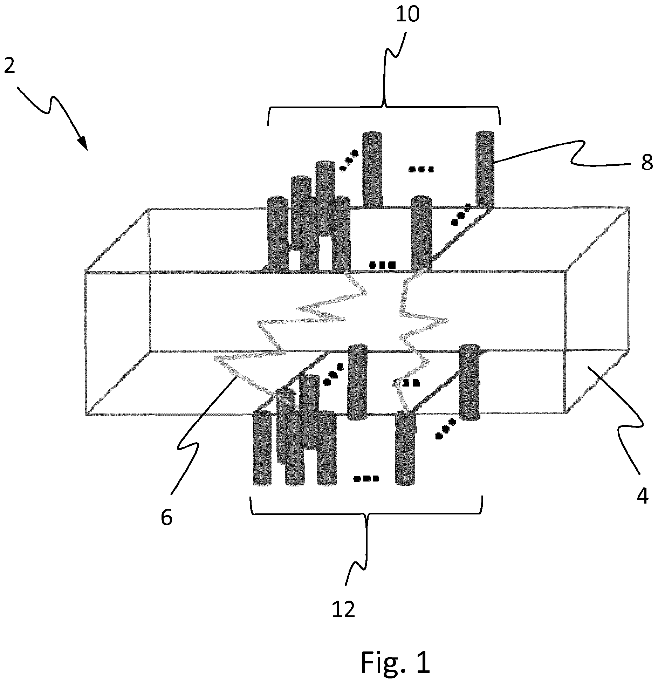

Fig. 1 schematically shows an embodiment of a multiple-input, multiple-output (MIMO) communication apparatus 2. The apparatus 2 comprises a first *n* x *m* array 10 of electrodes 8, a second *n* x *m* array 12 of electrodes 8, and a channel 4 containing an ionisable gaseous medium disposed between the first and second arrays 10, 12 of electrodes 8. The apparatus 2 further comprises the following additional elements, not shown in Fig. 1: a channel controller for varying at least one property of the channel 4, a modulator for modulating a charge and/or voltage to apply to the first array 10 of electrodes with an information-bearing signal, a charger for applying the modulated charge and/or voltage to one or more of the electrodes 8 of the first array 10, a charge-measuring device for measuring the charge and/or voltage of one or more of the electrodes 8 of the second array 12, and a demodulator for demodulating the measured charge and/or voltage to recover the signal.

The channel controller is able to vary the pressure, the temperature and the composition of the ionisable gaseous medium, which may be any such medium, like air, a noble gas, a mixture of different gases, such as carbon dioxide, nitrogen, water vapour, and so on. Preferably, the gas or gases used are not readily combustible or ignitable if brought into contact with air or oxygen, in order to increase the safety of the apparatus. In specialist applications, however, such other gases as hydrogen and methane may be used alternatively or in addition thereto. The channel controller is also able to evacuate the ionisable gaseous medium from the channel, in order to close the channel to communication. The channel controller may vary the pressure and/or the temperature of the ionisable gaseous medium by changing the volume of the channel 4 itself, for example. Different species of gas or gases may be introduced to and removed from the channel 4 by means of pumps and valves.

The separation between the first array of electrodes and the second array of electrodes is variable by the channel controller, as is the pattern and separation between adjacent electrodes in each of the first and second arrays. This can be achieved by a servo motor mechanism for macroscopic movements of the electrodes, and by nanoengineering techniques and microelectromechanical systems (MEMs) for nanoscale and microscopic movements of the electrodes, respectively. The channel controller can increase the separation between the first array of electrodes and the second array of electrodes at the same time as evacuating the ionisable gaseous medium from the channel, in order to close the channel to communication in the most effective way possible. The channel controller can also alter the geometric configuration of the electrodes in each of the first and second arrays, including the separations of adjacent electrodes in the same array as each other, in order to perform diversity-multiplexing trade-off (DMT) between simultaneously transmitted signals.

The apparatus further comprises a coder for applying a forward error-correction code to the modulated charge and/or voltage, and a decoder for decoding the measured charge and/or voltage, neither of which are shown in Fig. 1. Data transmission errors introduced by unintended discharges may thereby be reduced or eliminated.

The communication apparatus 2 may operate as a MIMO, MISO or a SIMO communication apparatus according to how one or more information-bearing signals are modulated into the charge and/or voltage applied to the electrodes 8 of the first array 10 and the paths taken by one or more electrical discharges 6 to the electrodes 8 of the second array 12. The charge and/or voltage at the electrodes 8 of the second array 12 may be measured by the charge-measuring device using conventional electrostatic charge and voltage metering techniques.

In order to help guide the electrical discharges 6 between the respective electrodes 8 of the first and second arrays 10, 12, the apparatus further comprises a plurality of lasers, also not shown in Fig. 1, which establish preferred paths of ionisation through the ionisable gaseous medium, thereby directing the electrical discharges 6 along substantially rectilinear pathways. Such laser guidance of electrical discharges is described, for example, in Arantchouk, L., et al.: "Large scale Tesla coil guided discharges initiated by femtosecond laser filamentation in air", Journal of Applied Physics, volume 116, no. 1, 013303 (2014). Thus, whereas the electrical discharges 6 are represented schematically in Fig. 1 as jagged, chaotic pathways, they can in practice be made substantially rectilinear from a selected one or ones of the electrodes 8 in the first array 10 to selected one or ones of the electrodes 8 in the second array 12 when guided in this way. The lasers may, for example, be laser diodes directed by MEMS mirrors, with switching of the lasers on and off and directional orientation of the mirrors both being controlled by the channel controller.

The communication apparatus 2 further comprises an energy storage device, also not shown in Fig. 1, which is a supercapacitor for accumulating energy from electrical discharges received by the electrodes 8 of the second array 12. Thus the communication apparatus 2 may be used for simultaneous wireless information and power transfer (SWIPT).

Whereas the communication apparatus 2 has been described above as being for the transmission of an information-bearing signal only from the first array 10 to the second array 12 of electrodes, in a possible alternative embodiment to that described above, each of the first and second arrays of electrodes 10, 12 may both be provided with respective modulators, demodulators, chargers and charge-measuring devices for two-way transmission of information-bearing signals in both directions between the first and second arrays of electrodes by electrical discharges 6 through the ionisable gaseous medium of the channel 4.

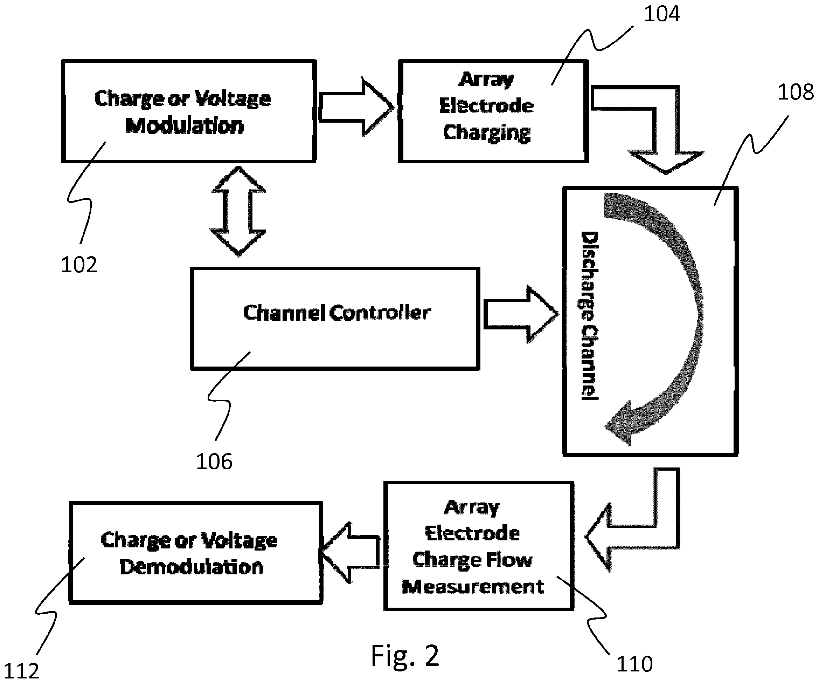

Fig. 2 schematically shows an embodiment of a method of transmitting information. As represented by box 102, the method starts by modulating a charge and/or voltage with an information-bearing signal under control of a channel controller 106. The modulation may be modulation of the amplitude and/or of the frequency of the charge and/or the voltage. One or more electrodes of a first array of electrodes are then charged 104 with the modulated charge and/or voltage. The channel controller 106 also controls at least one property of a channel containing an ionisable gaseous medium, through which an electrical discharge is transmitted 108 from the one or more electrodes of the first array to one or more electrodes of a second array of electrodes. The charge and/or voltage at the second array of electrodes is then measured 110, and the measured charge and/or voltage is demodulated 112 to recover the signal.

Potential applications of this method include at least the following. Nanoscale or microscale on-chip communication architectures for electronics devices where, for example, the sizes of RF antenna do not currently allow communication. Secure communication architectures requiring a communication channel which can be closed in a reliable and controllable way and which can be achieved with the technology disclosed herein by evacuation of the communication channel. Macroscale applications for long-range and wireless telecommunications which are immune to jamming and electromagnetic interference.

Thus, the present invention provides a multiple-input, multiple-output (MIMO) communication apparatus and corresponding method of transmitting information, which are also usable for simultaneous wireless information and power transfer (SWIPT). The MIMO communication apparatus at least comprises a first array of electrodes, a second array of electrodes, a channel containing an ionisable gaseous medium disposed between the first and second arrays of electrodes, a channel controller, a modulator and charger associated with the first array of electrodes, and a charge- and/or voltage-measuring device and demodulator associated with the second array of electrodes. The channel controller is for varying at least one property of the channel, such as the pressure and temperature of the gaseous medium, as well as for controlling the modulator to modulate a charge and/or voltage with an information-bearing signal, before the modulated charge and/or voltage is applied by the charger to the first array of electrodes for transmission of the signal by one or more electrical discharges through the ionisable gaseous medium to the second array. The charge- and/or voltage of the second array is measured by the charge and/or voltage-measuring device and demodulated by the demodulator to recover the signal. This communication apparatus and the corresponding method therefore present a novel physical channel of communication, which is immune to jamming and interference by radio-frequency electromagnetic radiation and which is also physically more secure than conventional techniques of MIMO communication.

**Reference Numerals:**

| | | | |
|---|---|---|---|
| 2 | MIMO communication apparatus | 102 | Charge and/or voltage modulation |
| 4 | Channel containing ionisable | 104 | Charging of array of transmitter |
| | gaseous medium | | electrodes |
| 6 | Electrical discharge | 106 | Channel controller |
| 8 | Electrode | 108 | Electrical discharge across channel |
| 10 | Array of transmitting electrodes | 110 | Charge and/or voltage measurement at array of receiving electrodes |
| 12 | Array of receiving electrodes | | |
| | | 112 | Charge and/or voltage demodulation |

## Claims

1. A multiple-input, multiple-output (MIMO) communication apparatus (2) comprising:
a first array (10) of electrodes (8);
a second array (12) of electrodes (8);
a channel (4) containing an ionisable gaseous medium disposed between the first and second arrays (10, 12) of electrodes;
a channel controller for varying at least one property of the channel (4);
a modulator for modulating a charge and/or voltage to apply to the first array (10) of electrodes with an information-bearing signal;
a charger for applying the modulated charge and/or voltage to one or more electrodes of the first array (10);
a charge- and/or voltage-measuring device for measuring the charge and/or voltage of the second array (12) of electrodes; and
a demodulator for demodulating the measured charge and/or voltage to recover the signal;
**characterized in that**:
a separation between the first and second arrays of electrodes (10, 12) is variable by the channel controller for transmitting the information-bearing signal via an electrical discharge (6) across the channel (4) from one or more electrodes of the first array (10) to one or more electrodes (8) of the second array (12).

2. A MIMO apparatus according to claim 1, wherein the channel controller is able to vary at least one of the pressure, the temperature and the composition of the ionisable gaseous medium, and/or is able to evacuate the ionisable gaseous medium from the channel (4).

3. A MIMO apparatus according to claim 1 or claim 2, wherein the channel controller for varying at least one property of the channel (4) comprises controlling the separation between the first array (10) of electrodes and the second array (12) of electrodes.

4. A MIMO apparatus according to any one of claims 1 to 3, wherein at least one of a pattern of and a separation between adjacent electrodes in at least one of the first and second arrays (10, 12) of electrodes is adjustable.

5. A MIMO apparatus according to any one of claims 1 to 4, further comprising:
a coder for applying a forward error-correction code to the modulated charge and/or voltage; and
a decoder for decoding the measured charge and/or voltage.

6. A MIMO apparatus according to any one of claims 1 to 5, further comprising at least one laser for guiding an electrical discharge (6) from at least one of the electrodes (8) of the first array (10) to at least one of the electrodes (8) of the second array (12).

7. A MIMO apparatus according to any one of claims 1 to 6, further comprising at least one energy storage device for accumulating energy from electrical discharges (6) received by at least one electrode (8) of the second array (12).

8. A method of transmitting information, the method at least comprising:
modulating (102) a charge and/or voltage with an information-bearing signal;
charging (104) one or more electrodes (8) of a first array (10) of electrodes with the modulated charge and/or voltage;
controlling (106) at least one property of a channel (4) containing an ionisable gaseous medium disposed between the first array (10) of electrodes and a second array (12) of electrodes;
varying a separation of the first and second arrays of electrodes (10, 12) for transmitting (108) the information-bearing signal via an electrical discharge (6) across the channel (4) from the one or more electrodes of the first array (10) to one or more electrodes (8) of the second array (12) of electrodes;
measuring (110) the charge and/or voltage at the second array (12) of electrodes; and
demodulating (112) the measured charge and/or voltage to recover the signal.

9. A method according to claim 8, wherein controlling (106) at least one property of the channel (4) comprises controlling at least one of the pressure, the temperature and the composition of the ionisable gaseous medium.

10. A method according to claim 8 or claim 9, wherein controlling (106) at least one property of the channel (4) at least comprises controlling the separation between the first array (10) of electrodes and the second array (12) of electrodes.

11. A method according to any one of claims 8 to 10, further comprising closing the channel (4) by evacuating the ionisable gaseous medium therefrom.

12. A method according to claim 11, further comprising increasing the separation between the first array (10) of electrodes and the second array (12) of electrodes at the same time as evacuating the ionisable gaseous medium from the channel.

13. A method according to any one of claims 8 to 12, further comprising:
applying a forward error-correction code to the modulated charge and/or voltage before transmitting (108) the electrical discharge (6); and
decoding the measured charge and/or voltage after transmitting (108) the electrical discharge (6).

14. A method according to any one of claims 8 to 13, further comprising adjusting at least one of a pattern of and a separation between adjacent electrodes in at least one of the first and second arrays (10, 12) of electrodes.

15. A method according to any one of claims 8 to 14, further comprising guiding the electrical discharge (6) with a laser.

## Patentansprüche

1. MIMO-Kommunikationsvorrichtung (multiple-input, multiple-output), die Folgendes aufweist:
ein erstes Array (10) von Elektroden (8);
ein zweites Array (12) von Elektroden (8);
einen Kanal (4), der ein ionisierbares gasförmiges Medium enthält, das zwischen dem ersten und dem zweiten Array (10, 12) von Elektroden angeordnet ist;
eine Kanalsteuerung zum Variieren mindestens einer Eigenschaft des Kanals (4);
einen Modulator zum Modulieren einer Ladung und/oder Spannung, die an das erste Array (10) von Elektroden anzulegen ist, mit einem informationstragenden Signal;
ein Ladegerät zum Anlegen der modulierten Ladung und/oder Spannung an eine oder mehrere Elektroden des ersten Arrays (10);
eine Ladungs- und/oder Spannungsmessvorrichtung zum Messen der Ladung und/oder Spannung des zweiten Arrays (12) von Elektroden; und
einen Demodulator zum Demodulieren der gemessenen Ladung und/oder Spannung zur Rückgewinnung des Signals;
**dadurch gekennzeichnet, dass**:
eine Beabstandung zwischen dem ersten und dem zweiten Array von Elektroden (10, 12) durch die Kanalsteuerung variabel ist, um das informationstragende Signal über eine elektrische Entladung (6) über den Kanal (4) von einer oder mehreren Elektroden des ersten Arrays (10) zu einer oder mehreren Elektroden (8) des zweiten Arrays (12) zu übertragen.

2. MIMO-Vorrichtung gemäß Anspruch 1, wobei die Kanalsteuerung in der Lage ist, den Druck, die Temperatur und/oder die Zusammensetzung des ionisierbaren gasförmigen Mediums zu verändern und/oder das ionisierbare gasförmige Medium aus dem Kanal (4) zu evakuieren.

3. MIMO-Vorrichtung gemäß Anspruch 1 oder Anspruch 2, wobei die Kanalsteuerung zum Variieren mindestens einer Eigenschaft des Kanals (4) eine Steuerung der Beabstandung zwischen dem ersten Array (10) von Elektroden und dem zweiten Array (12) von Elektroden aufweist.

4. MIMO-Vorrichtung gemäß einem der Ansprüche 1 bis 3, wobei mindestens eines von einem Muster von und einem Abstand zwischen benachbarten Elektroden in mindestens einem der ersten und zweiten Arrays (10, 12) von Elektroden einstellbar ist.

5. MIMO-Vorrichtung gemäß einem der Ansprüche 1 bis 4, die ferner aufweist:
einen Codierer zum Anwenden eines Vorwärtsfehlerkorrekturcodes auf die modulierte Ladung und/oder Spannung; und
einen Decoder zum Dekodieren der gemessenen Ladung und/oder Spannung.

6. MIMO-Vorrichtung gemäß einem der Ansprüche 1 bis 5, die ferner mindestens einen Laser zum Leiten einer elektrischen Entladung (6) von mindestens einer der Elektroden (8) des ersten Arrays (10) zu mindestens einer der Elektroden (8) des zweiten Arrays (12) aufweist.

7. MIMO-Vorrichtung gemäß einem der Ansprüche 1 bis 6, die ferner mindestens eine Energiespeichervorrichtung zum Akkumulieren von Energie aus elektrischen Entladungen (6) aufweist, die von mindestens einer Elektrode (8) des zweiten Arrays (12) empfangen werden.

8. Verfahren zum Übertragen von Informationen, wobei das Verfahren mindestens aufweist:
Modulieren (102) einer Ladung und/oder Spannung mit einem informationstragenden Signal;
Aufladen (104) einer oder mehrerer Elektroden (8) eines ersten Arrays (10) von Elektroden mit der modulierten Ladung und/oder Spannung;
Steuern (106) mindestens einer Eigenschaft eines Kanals (4), der ein ionisierbares gasförmiges Medium enthält, das zwischen dem ersten Array (10) von Elektroden und einem zweiten Array (12) von Elektroden angeordnet ist;
Variieren einer Beabstandung des ersten und zweiten Arrays von Elektroden (10, 12) zum Übertragen (108) des informationstragenden Signals über eine elektrische Entladung (6) durch den Kanal (4) von der einen oder den mehreren Elektroden des ersten Arrays (10) zu einer oder mehreren Elektroden (8) des zweiten Arrays (12) von Elektroden;
Messen (110) der Ladung und/oder Spannung an dem zweiten Array (12) von Elektroden; und
Demodulieren (112) der gemessenen Ladung und/oder Spannung zur Wiederherstellung des Signals.

9. Verfahren gemäß Anspruch 8, wobei das Steuern (106) mindestens einer Eigenschaft des Kanals (4) das Steuern mindestens eines von Druck, Temperatur und Zusammensetzung des ionisierbaren gasförmigen Mediums aufweist.

10. Verfahren gemäß Anspruch 8 oder Anspruch 9, wobei das Steuern (106) mindestens einer Eigenschaft des Kanals (4) mindestens das Steuern der Beabstandung zwischen dem ersten Array (10) von Elektroden und dem zweiten Array (12) von Elektroden aufweist.

11. Verfahren gemäß einem der Ansprüche 8 bis 10, das ferner das Verschließen des Kanals (4) durch Evakuieren des ionisierbaren gasförmigen Mediums aus diesem aufweist.

12. Verfahren gemäß Anspruch 11, das ferner aufweist, dass der Abstand zwischen dem ersten Array (10) von Elektroden und dem zweiten Array (12) von Elektroden gleichzeitig mit dem Evakuieren des ionisierbaren gasförmigen Mediums aus dem Kanal erhöht wird.

13. Verfahren gemäß einem der Ansprüche 8 bis 12, das ferner aufweist:
Anwenden eines Vorwärtsfehlerkorrekturcodes auf die modulierte Ladung und/oder Spannung vor dem Übertragen (108) der elektrischen Entladung (6); und
Dekodieren der gemessenen Ladung und/oder Spannung nach dem Übertragen (108) der elektrischen Entladung (6).

14. Verfahren gemäß einem der Ansprüche 8 bis 13, das ferner das Einstellen mindestens eines Musters von und eines Abstands zwischen benachbarten Elektroden in mindestens einem der ersten und zweiten Arrays (10, 12) von Elektroden aufweist.

15. Verfahren gemäß einem der Ansprüche 8 bis 14, das ferner das Führen der elektrischen Entladung (6) mit einem Laser aufweist.

## Revendications

1. Appareil de communication (2) à entrées multiples et à sorties multiples (MIMO) comprenant :
un premier réseau (10) d'électrodes (8) ;
un second réseau (12) d'électrodes (8) ;
un canal (4) contenant un milieu gazeux ionisable disposé entre les premier et second réseaux (10, 12) d'électrodes ;
un contrôleur de canal pour faire varier au moins une propriété du canal (4) ;
un modulateur pour moduler une charge et/ou une tension à appliquer au premier réseau (10) d'électrodes avec un signal porteur d'informations ;
un chargeur pour appliquer la charge et/ou la tension modulée à une ou plusieurs électrodes du premier réseau (10) ;
un dispositif de mesure de charge et/ou de tension pour mesurer la charge et/ou la tension du second réseau (12) d'électrodes ; et
un démodulateur pour démoduler la charge et/ou la tension mesurée pour récupérer le signal ;
**caractérisé en ce que** :
un séparateur entre les premier et second réseaux d'électrodes (10, 12) est variable par le contrôleur de canal pour transmettre le signal porteur d'informations via une décharge électrique (6) à travers le canal (4) depuis une ou plusieurs électrodes du premier réseau (10) vers une ou plusieurs électrodes (8) du second réseau (12).

2. Appareil MIMO selon la revendication 1, dans lequel le contrôleur de canal est capable de faire varier au moins un élément parmi la pression, la température et la composition du milieu gazeux ionisable, et/ou est capable d'évacuer le milieu gazeux ionisable du canal (4).

3. Appareil MIMO selon la revendication 1 ou la revendication 2, dans lequel le contrôleur de canal pour faire varier au moins une propriété du canal (4) comprend la commande de la séparation entre le premier réseau (10) d'électrodes et le second réseau (12) d'électrodes.

4. Appareil MIMO selon l'une quelconque des revendications 1 à 3, dans lequel au moins l'un d'un motif et d'une séparation entre des électrodes adjacentes dans au moins l'un des premier et second réseaux (10, 12) d'électrodes est réglable.

5. Appareil MIMO selon l'une quelconque des revendications 1 à 4, comprenant en outre :
un codeur pour appliquer un code de correction d'erreurs direct à la charge et/ou à la tension modulée ; et
un décodeur pour décoder la charge et/ou la tension mesurée.

6. Appareil MIMO selon l'une quelconque des revendications 1 à 5, comprenant en outre au moins un laser pour guider une décharge électrique (6) d'au moins une des électrodes (8) du premier réseau (10) vers au moins une des électrodes (8) du second réseau (12).

7. Appareil MIMO selon l'une quelconque des revendications 1 à 6, comprenant en outre au moins un dispositif de stockage d'énergie pour accumuler l'énergie provenant des décharges électriques (6) reçues par au moins une électrode (8) du deuxième réseau (12).

8. Méthode de transmission d'informations, la méthode comprenant au moins :
la modulation (102) d'une charge et/ou d'une tension avec un signal porteur d'informations ;
charger (104) une ou plusieurs électrodes (8) d'un premier réseau (10) d'électrodes avec la charge et/ou la tension modulée ;
commander (106) au moins une propriété d'un canal (4) contenant un milieu gazeux ionisable disposé entre le premier réseau (10) d'électrodes et un second réseau (12) d'électrodes ;
faire varier une séparation des premier et second réseaux d'électrodes (10, 12) pour transmettre (108) le signal porteur d'informations par l'intermédiaire d'une décharge électrique (6) à travers le canal (4) à partir d'une ou plusieurs électrodes du premier réseau (10) vers une ou plusieurs électrodes (8) du second réseau (12) d'électrodes ;
mesurer (110) la charge et/ou la tension au niveau du deuxième réseau (12) d'électrodes ; et
démoduler (112) la charge et/ou la tension mesurée pour récupérer le signal.

9. Méthode selon la revendication 8, dans laquelle le contrôle (106) d'au moins une propriété du canal (4) comprend le contrôle d'au moins un élément parmi la pression, la température et la composition du milieu gazeux ionisable.

10. Méthode selon la revendication 8 ou la revendication 9, dans laquelle le contrôle (106) d'au moins une propriété du canal (4) comprend au moins le contrôle de la séparation entre le premier réseau (10) d'électrodes et le second réseau (12) d'électrodes.

11. Méthode selon l'une quelconque des revendications 8 à 10, comprenant en outre la fermeture du canal (4) par évacuation du milieu gazeux ionisable de celui-ci.

12. Méthode selon la revendication 11, comprenant en outre l'augmentation de la séparation entre le premier réseau (10) d'électrodes et le second réseau (12) d'électrodes en même temps que l'évacuation du milieu gazeux ionisable du canal.

13. Méthode selon l'une quelconque des revendications 8 à 12, comprenant en outre :
l'application d'un code de correction d'erreurs direct à la charge et/ou à la tension modulée avant de transmettre (108) la décharge électrique (6) ; et
décoder la charge et/ou la tension mesurée après transmission (108) de la décharge électrique (6).

14. Méthode selon l'une quelconque des revendications 8 à 13, comprenant en outre l'ajustement d'au moins l'un d'un motif et d'une séparation entre des électrodes adjacentes dans au moins l'un des premier et second réseaux (10, 12) d'électrodes.

15. Méthode selon l'une quelconque des revendications 8 à 14, comprenant en outre le guidage de la décharge électrique (6) avec un laser.
